# EUROPEAN PATENT APPLICATION

(11) **EP 2 717 142 A1**
(43) Date of publication of application: **09.04.2014**
(21) Application number: 12792294.6
(22) Date of filing: 27.02.2012
(51) Int. Cl.: G06F 3/048, G06F 3/033, H01H 25/04

(54) **INPUT DEVICE**

(30) Priority: 30.05.2011 JP 2011120960
(71) Applicant: Honda Motor Co., Ltd., Minato-ku Tokyo 107-8556 (JP)
(72) Inventor: SUZUKI Takeyuki, Wako-shi Saitama 351-0193 (JP)
(74) Representative: Feller, Frank
(86) International application number: PCT/JP2012/054768
(87) International publication number: WO 2012/164988

(57) **Abstract**

An input apparatus comprising: a display device that displays a first hierarchy icon, a second hierarchy icon which is in a state where setting options corresponding to characteristics of the first hierarchy icon are displayed to be arranged in an annular shape, and a pointer; and an input device that integrally includes a rotation device, a joystick device, and a determination device, wherein the display device moves the pointer in a direction corresponding to an operation direction, wherein when the pointer stops within a predetermined distance range or the pointer moves at a predetermined speed or less within the predetermined distance range, the display device changes the first hierarchy icon to the second hierarchy icon, wherein the display device shifts the options in the annular shape in a rotation direction, and wherein the determination device determines setting of the option, which is positioned at a predetermined position by a predetermined operation of the operator among the options, as the setting corresponding to the characteristics of the current first hierarchy icon.

## Description

### Technical Field of the Invention

The present invention relates to an input apparatus.

Priority is claimed on Japanese Patent Application No. 2011-120960, filed May 30, 2011, the content of which is incorporated herein by reference.

### Background Art

For example, in the related art, a navigation device is known (for example, refer to Patent Document 1), and in the navigation device, if a cross cursor, which relatively moves on a map by an operation scrolling the map or the like, reaches a predetermined distance range of a predetermined point (predetermined relay point, destination, or the like), the cross cursor is changed to an arrow icon to show that various operations with respect to the predetermined point are possible. In addition, at this time, if a predetermined operation (an operation of an execution key or the like) is performed, menu items of various editing operations such as executable deletion or movement to the predetermined point are displayed.

### Prior Art Documents

### Patent Documents

Patent Document 1: Japanese Unexamined Patent Application, First Publication No. 2002-286489

### Summary of the Invention

### Problems to be Solved by the Invention

However, in the navigation device according to the related art, only automatically displaying menu items of selectable editing operations with respect to editing of the predetermined point are provided. Thereby, it is preferable to further relieve a burden of an operator for performing presentations of various selectable menu items or selection operations of desired menu items, and thus, to improve intuitive operability and convenience for the operator.

The present invention is made in consideration of the above-described circumstances, and an object thereof is to provide an input apparatus capable of improving intuitive operability and convenience for the operator by relieving an operation burden of the operator.

### Means for Solving the Problems

In order to solve the above-described problems and achieve the object, the following are adopted.

That is,
(1) according to an aspect of the present invention, an input apparatus is provided, including: a display device that displays a first hierarchy icon, a second hierarchy icon which is in a state where setting options corresponding to characteristics of the first hierarchy icon are displayed to be arranged in an annular shape, and a pointer; and an input device that integrally includes a rotation device, a joystick device, and a determination device, wherein the display device moves the pointer in a direction corresponding to an operation direction in which the joystick device is operated by an operation of the joystick device of the input device operated by an operator, wherein when the pointer stops within a predetermined distance range from a center portion of the first hierarchy icon or the pointer moves at a predetermined speed or less within the predetermined distance range from the center portion of the first hierarchy icon, the display device changes the first hierarchy icon to the second hierarchy icon, wherein the display device shifts the options in the annular shape in a rotation direction in which the rotation device is operated to be rotated by a rotation operation of the rotation device of the input device operated by the operator, and wherein the determination device of the input device determines setting of the option, which is positioned at a predetermined position by a predetermined operation of the operator among the options, as the setting corresponding to the characteristics of the current first hierarchy icon.
(2) According to another aspect of the present invention, an input apparatus is provided, including: a display device that displays a first hierarchy icon, a second hierarchy icon which is in a state where setting options corresponding to characteristics of the first hierarchy icon are displayed to be arranged in an annular shape, an intermediate hierarchy icon different from the first hierarchy icon, and a pointer; and an input device that integrally includes a rotation device, a joystick device, and a determination device, wherein the display device moves the pointer in a direction corresponding to an operation direction in which the joystick device is operated by an operation of the joystick device of the input device operated by an operator, wherein when the pointer stops within a first predetermined distance range from a center portion of the first hierarchy icon or the pointer moves at a first predetermined speed or less within the first predetermined distance range from the center portion of the first hierarchy icon, the display device changes the first hierarchy icon to the intermediate hierarchy icon, wherein when the pointer moves at a second predetermined speed, which is slower than the first predetermined speed, or less within a second predetermined distance range from a center portion of the intermediate hierarchy icon, the display device changes the intermediate hierarchy icon to the second hierarchy icon, wherein the display device shifts the options in the annular shape in a rotation direction in which the rotation device is operated to be rotated by the rotation operation of the rotation device of the input device operated by the operator, and wherein the determination device of the input device determines setting of the option, which is positioned at a predetermined position by a predetermined operation of the operator among the options, as the setting corresponding to the characteristics of the current first hierarchy icon.
(3) In the input apparatus according to (1) or (2), after the option is determined by the determination device, the display device displays the determined option as the first hierarchy icon.
(4) In the aspect described in any one of (1) to (3), the display device causes the pointer to be an annular shape when the second hierarchy icon is displayed.
(5) In the aspect described in any one of (1) to (4), the rotation device detects the rotation of the rotation device only when the display device displays the second hierarchy icon.

### Effect of the Invention

According to the input apparatus in the aspect of (1) of the present invention, when the pointer approaches the first hierarchy icon, since the first hierarchy icon is changed to the second hierarchy icon, the operator can easily and quickly recognize the operable first hierarchy icon, and the operation burden, which is required until the operator reaches a desired first hierarchy icon, can be relieved.

Moreover, in the second hierarchy icon, the options are disposed in an annular shape, and the options are shifted to an annular shape in a rotation direction (that is, clockwise rotation or counterclockwise rotation) of the rotation operation of the rotation device. Thereby, the operator can intuitively recognize that the options can be selected by the rotation operation of the rotation device of the input device.

Moreover, the movement of the pointer operated by the joystick device and the shift of the option rotationally operated by the rotation device can be performed by a series of consecutive operations with respect to a single input device. Thereby, for example, a movement of a hand for adjusting grip on the input device or a visual line movement for searching the input device is not needed and intuitive operability and convenience can be improved.

Moreover, according to the input apparatus in the aspect of (2) of the present invention, the first hierarchy icon is changed to the second hierarchy icon via the intermediate hierarchy icon when the pointer approaches the first hierarchy icon. Thereby, the operator can recognize the operable first hierarchy icon easily, quickly, and accurately, and an operation burden, which is required until the operator reaches a desired first hierarchy icon, can be relieved.

Moreover, in the second hierarchy icon, the options are disposed in an annular shape, and the options are shifted in an annular shape in the rotation direction (that is, clockwise rotation or counterclockwise rotation) of the rotation operation of the rotation device. Thereby, the operator can intuitively recognize that the options can be selected by the rotation operation of the rotation device of the input device.

Moreover, the movement of the pointer operated by the joystick device and the shift rotationally operated by the rotation device can be performed by a series of consecutive operations with respect to a single input device. Thereby, for example, a movement of a hand for adjusting grip on the input device or a visual line movement for searching the input device is not needed and intuitive operability and convenience can be improved.

Moreover, according to the input apparatus in the aspect of (3) of the present invention, after a predetermined option is determined by the determination device during the displaying of the second hierarchy icon in which the options are displayed to be arranged in an annular shape, the determined option is changed to the state which is displayed as the first hierarchy icon.

Thereby, the displays of other options which have not been determined by the determination device stop, and thus, the display area within the display screen or the like can be effectively used, and the determined option can be quickly and accurately viewed to the operator. Therefore, the time of the visual line movement of the operator can be decreased.

In addition, according to the input apparatus in the aspect of (4) of the present invention, the operator can intuitively recognize that the option can be selected by the rotation operation of the rotation device of the input device operated by the pointer having the annular shape. Thereby, intuitive operability and convenience can be improved.

In addition, according to the input apparatus in the aspect of (5) of the present invention, false detection is prevented and an operation load can be relieved.

### Brief Description of the Drawings

FIG. 1 is a configuration view of an input apparatus according to an embodiment of the present invention.
FIG. 2 is a view showing operations which can be carried out with an operating member of the input apparatus according to the embodiment.
FIG. 3 is a view showing examples of a first hierarchy icon, a second hierarchy icon, and a pointer which are displayed on a display screen of the input apparatus according to the embodiment.
FIG. 4A is a view showing an example of a tilting operation and a rotation operation with respect to the operating member of the input apparatus according to the embodiment.
FIG. 4B is a view showing an example of the tilting operation and the rotation operation with respect to the operating member of the input apparatus according to the embodiment.
FIG. 5A is a view showing examples of the first hierarchy icon, the second hierarchy icon, and the pointer which are displayed on the display screen of the input apparatus according to the embodiment.
FIG. 5B is a view showing examples of the first hierarchy icon, the second hierarchy icon, and the pointer which are displayed on the display screen of the input apparatus according to the embodiment.
FIG. 5C is a view showing examples of the first hierarchy icon, the second hierarchy icon, and the pointer which are displayed on the display screen of the input apparatus according to the embodiment.
FIG. 6A is a view showing examples of the first hierarchy icon, the second hierarchy icon, and the pointer which are displayed on the display screen of the input apparatus according to the embodiment.
FIG. 6B is a view showing examples of the first hierarchy icon, the second hierarchy icon, and the pointer which are displayed on the display screen of the input apparatus according to the embodiment.
FIG. 6C is a view showing examples of the first hierarchy icon, the second hierarchy icon, and the pointer which are displayed on the display screen of the input apparatus according to the embodiment.
FIG. 7 is a view showing examples of the first hierarchy icon, the second hierarchy icon, and the pointer which are displayed on the display screen of the input apparatus according to the embodiment.
FIG. 8A is a view showing an example of the tilting operation and the rotation operation with respect to the operating member of the input apparatus according to the embodiment.
FIG. 8B is a view showing an example of the tilting operation and the rotation operation with respect to the operating member of the input apparatus according to the embodiment.
FIG. 8C is a view showing an example of the tilting operation and the rotation operation with respect to the operating member of the input apparatus according to the embodiment.
FIG. 9 is a view showing examples of the first hierarchy icon, an intermediate hierarchy icon, the second hierarchy icon, and the pointer which are displayed on the display screen of the input apparatus according to a modification example of the embodiment.
FIG. 10A is a view showing an example of the tilting operation and the rotation operation with respect to the operating member of the input apparatus according to the modification example of the embodiment.
FIG. 10B is a view showing an example of the tilting operation and the rotation operation with respect to the operating member of the input apparatus according to the modification example of the embodiment.
FIG. 10C is a view showing an example of the tilting operation and the rotation operation with respect to the operating member of the input apparatus according to the modification example of the embodiment.
FIG. 11A is a view showing an example of display contents which are displayed on the display screen of the input apparatus according to the embodiment.
FIG. 11B is a view showing an example of display contents which are displayed on the display screen of the input apparatus according to the embodiment.
FIG. 12 is a view showing an example of an operation which strikes the operating member of the input apparatus according to the embodiment.
FIG. 13 is a view showing an example of display contents which are displayed on the display screen of the input apparatus according to the embodiment.
FIG. 14A is a view showing an example of the rotation operation with respect to the operating member of the input apparatus according to the embodiment.
FIG. 14B is a view showing an example of the rotation operation with respect to the operating member of the input apparatus according to the embodiment.

### Description of Embodiments

Hereinafter, an input apparatus according to an embodiment of the present invention will be described with reference to the accompanying drawings.

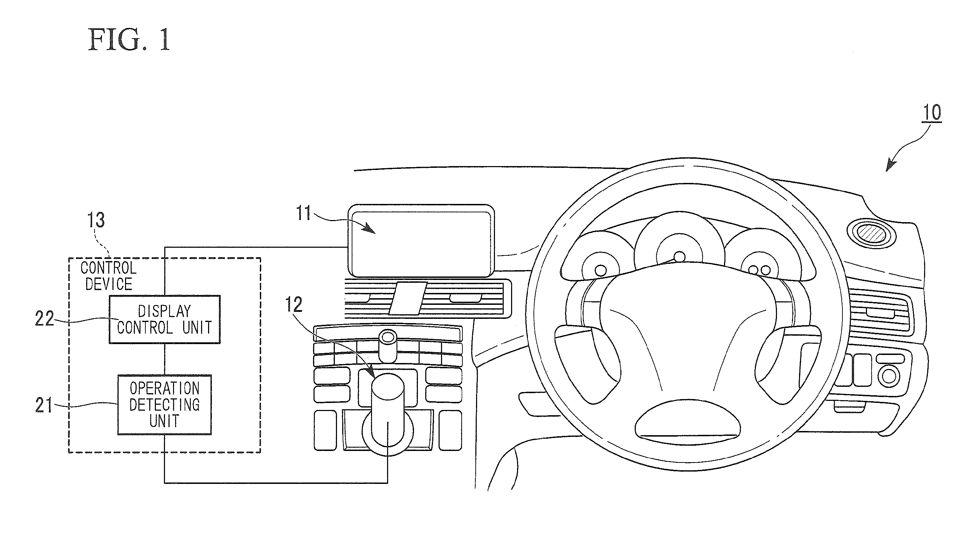

For example, as shown in FIG. 1, an input apparatus 10 of the present embodiment is configured to include a display screen (display device) 11, an operating member (input device) 12 which are provided on a dashboard of a vehicle, and a control device 13.

In addition, according to an input operation of an operator (for example, driver) with respect to the operating member 12, the input apparatus 10 controls operations of various on-board equipment (not shown).

For example, the display screen 11 is disposed on the dashboard. According to control signals which are output from the control device 13 which is changed by the input operations of the operator with respect to the operating member 12, the display screen 11 displays various icons and pointers.

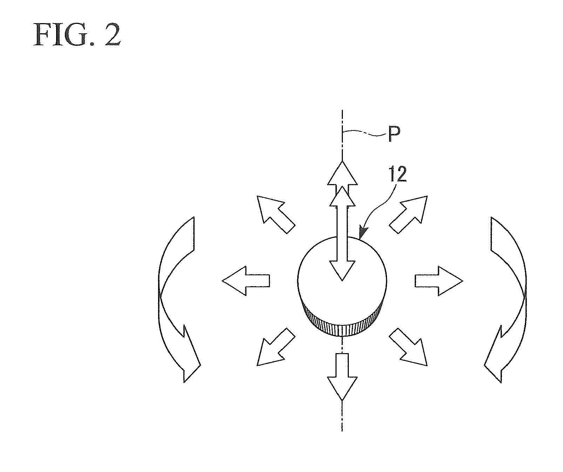

For example, as shown in FIG. 2, the operating member 12 is a knob which can be grasped by the operator. The operating member 12 is configured to integrally include a tilting mechanism (not shown) which is capable of tilting in an appropriate inclination direction from an axis P by a tilting operation (joy stick operation) of the operator, a rotation mechanism (not shown) which is capable of rotating around the axis P by a rotation operation of the operator, and a displacement mechanism (not shown) which is capable of being displaced in the direction of the axis P by a pressing operation of the operator.

In addition, the tilting mechanism outputs signals which indicate a tilting operation amount and a tilting operation direction in the tilting operation (joy stick operation) of the operator.

Moreover, the rotation mechanism outputs signals which indicate a rotation operation amount and a rotation operation direction in the rotation operation of the operator.

In addition, the displacement mechanism outputs signals which indicate the presence or absence of the pressing operation of the operator.

Moreover, a predetermined reference position is set in the axis P direction and in an appropriate direction in a plane perpendicular to the axis P, and the operating member 12 is set to be automatically returned to the reference position when there is no input operation from the operator.

The control device 13 detects the input operation of the operator with respect to the operating member 12. Moreover, the control device 13 outputs operations of various on-board equipment (not shown), for example, a control command for controlling the display or the like on the display screen 11 based on the detected results.

For example, the control device 13 is configured to include an operation-detecting unit 21 and a display control unit (display device) 22.

The operation-detecting unit 21 detects the tilting operation amount and the tilting operation direction in the tilting operation (joy stick operation) of the operator based on signals which are output from the tilting mechanism of the operation member 12.

In addition, the operation-detecting unit 21 detects the rotation operation amount and the rotation operation direction in the rotation operation of the operator based on signals which are output from the rotation mechanism of the operation member 12.

Moreover, the operation-detecting unit 21 detects the presence or absence of the pressing operation of the operator based on the signals output from the displacement mechanism of the operating member 12.

According to each operation of the operator with respect to the operating member 12 which is detected by the operation-detecting unit 21, the display control unit 22 controls displays of various icons and pointers on the display screen 11.

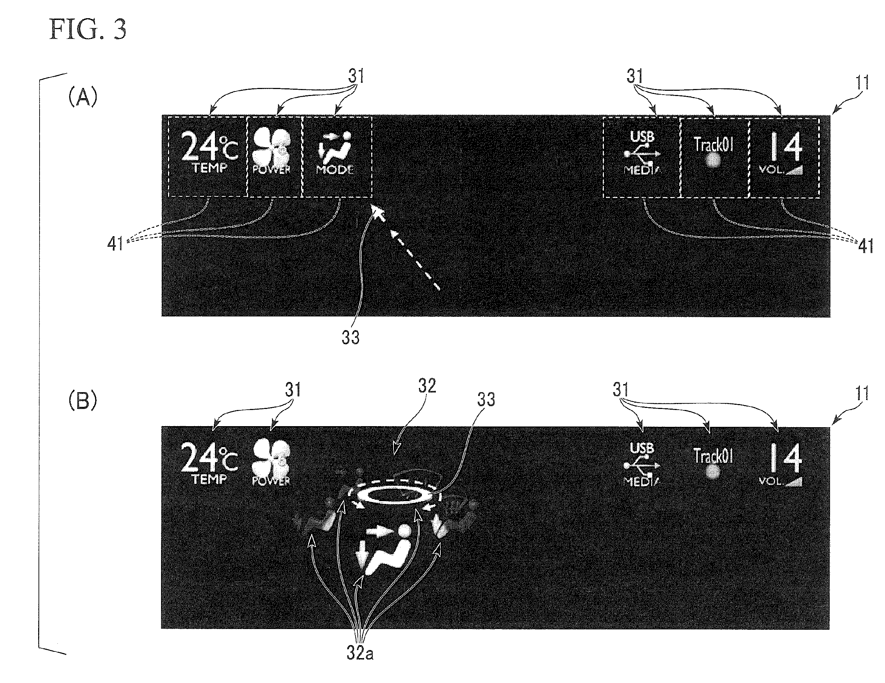

For example, as shown in FIGS. 3(A) and 3(B), the display control unit 22 is capable of displaying a first hierarchy icon 31, a second hierarchy icon 32 which is in a state where a plurality of setting options 32a corresponding to characteristics of the first hierarchy icon 31 are displayed to be arranged in an annular shape, and a pointer 33 on the display screen 11.

The display control unit 22 associates each movement direction of the pointer 33 having an indication shape (for example, an arrow shape) on the display screen 11 with respect to each tilting operation direction of the tilting operation of the tilting mechanism of the operating member 12 operated by the operator, in advance.

Moreover, the display control unit 22 associates a moving speed of the pointer 33 on the display screen 11 with respect to the tilting operation amount of the tilting operation of the tilting mechanism of the operating member 12 operated by the operator, in advance, and the moving speed is associated to be changed to have a tendency to increase according to an increase of the tilting operation amount.

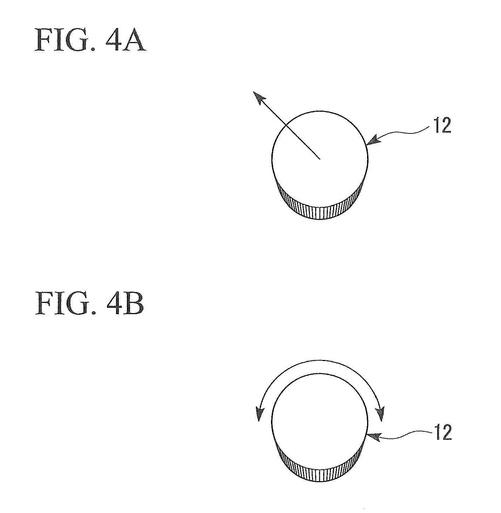

For example, as shown in FIG. 4A, if the tilting mechanism is operated to be tilted by the tilting operation of the tilting mechanism of the operating member 12 operated by the operator, for example, as shown in FIG. 3(A), the display control unit 22 moves the pointer 33 in the movement direction corresponding to the tilting operation direction of the tilting mechanism on the display screen 11 at the moving speed corresponding to the tilting operation amount.

When the pointer 33 stops within a predetermined distance range 41 (for example, within a predetermined distance range from the center portion of the first hierarchy icon 31, or the like) from the first hierarchy icon 31 which is displayed at a predetermined position on the display screen 11, or the pointer 33 moves at a predetermined speed (includes zero) or less within the predetermined distance range 41 from the first hierarchy icon 31, the display control unit 22 changes the first hierarchy icon 31 to the second hierarchy icon 32.

In addition, the display control unit 22 changes the shape of the pointer 33 from an indication shape (for example, an arrow shape or the like) to an annular shape according to the display of the second hierarchy icon 32, and prompts the operator to perform the rotation operation of the rotation mechanism of the operating member 12.

The display control unit 22 associates a shift direction (that is, clockwise rotation or counterclockwise rotation) of the plurality of options 32a which are disposed in an annular shape on the display screen 11 with respect to each rotation operation direction (that is, clockwise rotation or counterclockwise direction) of the rotation operation of the rotation mechanism of the operating member 12 operated by the operator, in advance.

Moreover, the display control unit 22 associates a shifting speed of the plurality of options 32a which are disposed in an annular shape on the display screen 11 with respect to the rotation operation amount of the rotation operation of the rotation mechanism of the operating member 12 operated by the operator, in advance, and the shifting speed is associated to be changed to have a tendency to increase according to an increase of the rotation operation amount.

For example, when the pointer 33 moves at a predetermined speed (includes a case where the speed is zero) or less within the predetermined distance range 41 from the first hierarchy icon 31 (for example, the first hierarchy icon 31 of "MODE" in FIG. 3(A)) which is displayed at a predetermined position on the display screen 11, for example, as shown in FIG. 3(B), the display control unit 22 changes the first hierarchy icon 31 to the second hierarchy icon 32 which is in the state where the plurality of options 32 are displayed to be arranged in an annular shape.

In addition, the display control unit 22 changes the shape of the pointer 33 from the indication shape (for example, an arrow shape or the like) to an annular shape according to the display of the second hierarchy icon 32.

Moreover, for example, as shown in FIG. 4B, if the rotation mechanism is operated to be rotated by the rotation operation of the rotation mechanism of the operating member 12 operated by the operator, for example, as shown FIG. 3(B), the display control unit 22 shifts the plurality of options 32a to an annular shape in the shift direction corresponding to the rotation operation direction of the rotation mechanism on the display screen 11 at the shifting speed corresponding to the rotation operation amount.

Here, the display control unit 22 highlights the option 32a at a predetermined position among the plurality of options 32a arranged in an annular shape, and the highlighted option 32a is set to be selectable (that is, can be determined as the setting corresponding to characteristics of the first hierarchy icon 31) by the pressing operation of the displacement mechanism of the operating member 12 operated by the operator.

The control unit 13 associates the selection (that is, is determined as the setting corresponding to the characteristics of the first hierarchy icon 31) of the highlighted option 32a at a predetermined position among the plurality of options 32a arranged in an annular shape on the display screen 11 with respect to the pressing operation of the displacement mechanism of the operating member 12 operated by the operator in the state where the second hierarchy icon 32 is displayed on the display screen 11, in advance.

For example, as shown in FIG. 3(B), in the state where the option 32a at a predetermined position among the plurality of options 32a which configure the second hierarchy icon 32 and are arranged in an annular shape is highlighted, if the displacement mechanism is operated to be pressed by the pressing operation of the displacement mechanism of the operation member 12 operated by the operator, the highlighted option 32a is selected, and the option 32a is determined as the setting corresponding to the characteristics of the first hierarchy icon 31.

Moreover, in the display state of the second hierarchy icon 32, when an appropriate option 32a is determined by the pressing operation of the displacement mechanism of the operating member 12 operated by the operator, the display control unit 22 changes the display of the second hierarchy icon 32 in which the plurality of options 32a are arranged in an annular shape to the display of the first hierarchy icon 31 which displays only the determined option 32a as the first hierarchy icon 31.

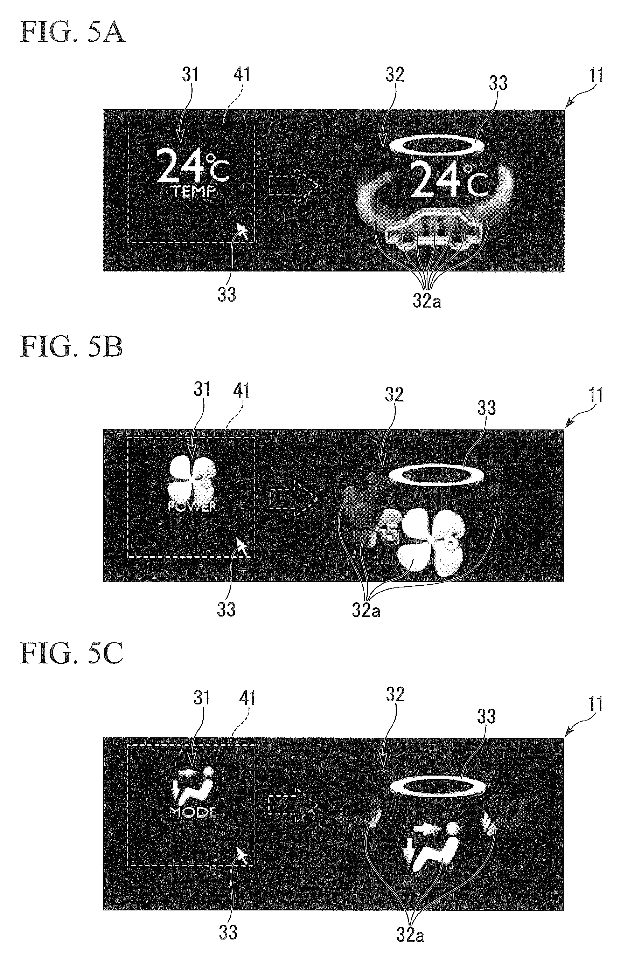

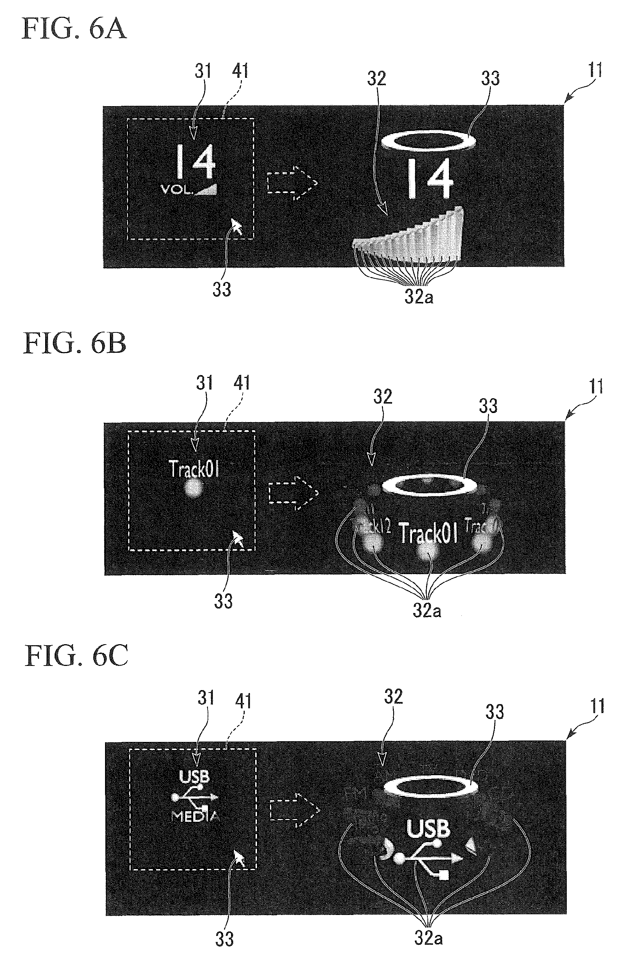

In addition, for example, as shown in FIGS. 5A, 5B, 5C, 6A, 6B, and 6C, the first hierarchy icon 31 displayed on the display screen 11 includes an image which displays a set temperature ("TEMP") of an air conditioner (not shown), an image which displays a set air amount ("POWER") of the air conditioner (not shown), an image which displays an operation state ("MODE") of the air conditioner (not shown), an image which displays set volume ("VOL.") of an acoustic device (not shown), an image which displays an output data name ("Track01") of an acoustic device (not shown), an image which displays a device to be operated ("MEDIA"), or the like.

Moreover, for example, as shown in FIGS. 5A, 5B, 5C, 6A, 6B, and 6C, the second hierarchy icon 32 displayed on the display screen 11 includes an image in which the plurality of options 32a are displayed to be arranged in an annular shape with respect to the set temperature of the air conditioner (not shown), an image in which the plurality of options 32a are displayed to be arranged in an annular shape with respect to the set air amount of the air conditioner (not shown), an image in which the plurality of options 32a are displayed to be arranged in an annular shape with respect to the operation state of the air conditioner (not shown), an image in which the plurality of options 32a are displayed to be arranged in an annular shape with respect to the set volume of the acoustic device (not shown), an image in which the plurality of options 32a are displayed to be arranged in an annular shape with respect to the output data name of the acoustic device (not shown), an image in which the plurality of options 32a are displayed to be arranged in an annular shape with respect to the device to be operated, or the like.

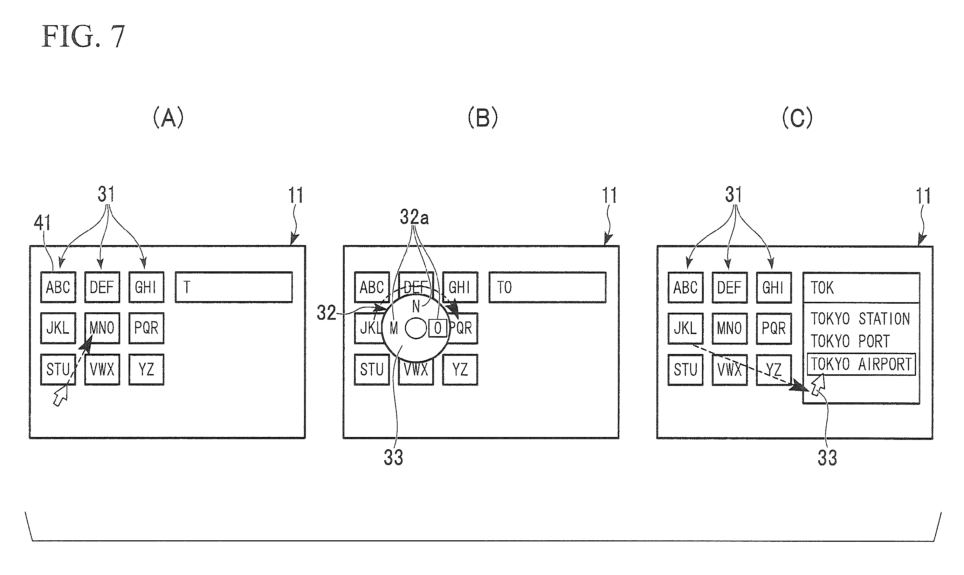

In addition, for example, as shown in FIGS. 7(A) to 7(C), the first hierarchy icon 31 which is displayed on the display screen 11 for a character input is an image which displays each character of the alphabet, and the second hierarchy icon 32 is an image in which the plurality of alphabet characters included in each first hierarchy icon 31 are displayed to be arranged in an annular shape as the options 32a.

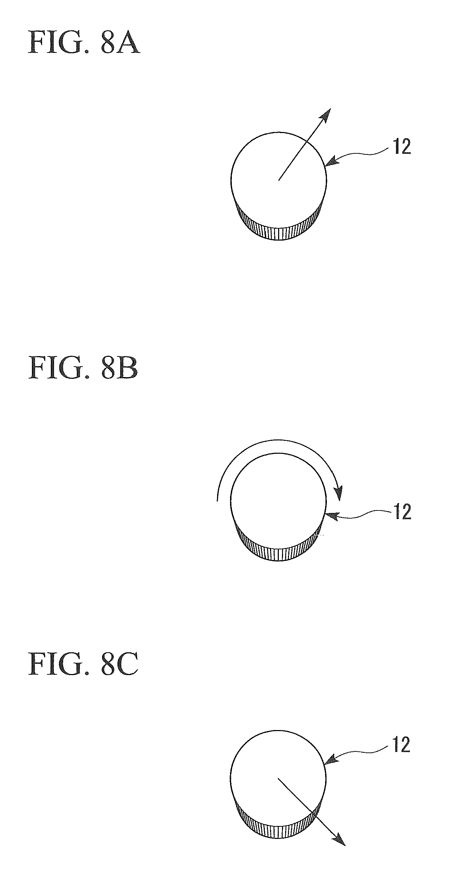

In the character input, for example, as shown in FIG. 8A, if the tilting mechanism is operated to be tilted by the tilting operation of the tilting mechanism of the operating member 12 operated by the operator, for example, as shown in FIG. 7(A), the display control unit 22 moves the pointer 33 in the movement direction corresponding to the tilting operation direction of the tilting mechanism on the display screen 11 at the moving speed corresponding to the tilting operation amount.

In addition, when the pointer 33 stops or moves at a predetermined speed (includes the case where the speed is zero) or less within the predetermined distance range 41 from the first hierarchy icon 31 (for example, an image which displays alphabet "MNO" in FIG. 7(A)) which is displayed at a predetermined position on the display screen 11, for example, as shown in FIG. 7(B), the display control unit 22 changes the first hierarchy icon 31 to the second hierarchy icon 32 which is in the state where the plurality of options 32a (for example, images which display the plurality of alphabet characters "MNO" which are included in the first hierarchy icon 31) are displayed to be arranged in an annular shape.

Moreover, the display control unit 22 changes the shape of the pointer 33 from the indication shape (for example, an arrow shape or the like) to the annular shape according to the display of the second hierarchy icon 32.

In addition, for example, as shown in FIG. 8B, the display control unit 22 shifts the plurality of options 32a to an annular shape according to the rotation operation of the rotation mechanism of the operating member 12 operated by the operator, and highlights the option 32a of a predetermined position. Moreover, the highlighted option 32a (for example, an image which displays the character of "O" in the alphabet) is selected according to the pressing operation of the displacement mechanism of the operating member 12 operated by the operator, and the option 32a is determined as the setting corresponding to the characteristics of the first hierarchy icon 31.

In addition, the display control unit 22 stores name data configured of morphemes, words, or the like, in advance, and when a candidate of the name data corresponding to a character string, in which the input is determined in the character input, exists, the display control unit 22 extracts the candidate and is capable of displaying the extracted candidate on the display screen 11.

For example, as shown in FIG. 7(C), when the candidate of the name data corresponding to the character string (for example, "TOK"), in which the input is determined, exists, the display control unit 22 extracts the candidate (for example, "TOKYO STATION", "TOKYO PORT", "TOKYO AIRPORT", or the like) and displays the extracted candidates at a predetermined position on the display screen 11.

In addition, as shown in FIG. 8C, if the tilting mechanism is operated to be tilted by the tilting operation of the tilting mechanism of the operating member 12 operated by the operator, for example, as shown in FIG. 7(C), the display control unit 22 moves the pointer 33 in the movement direction corresponding to the tilting operation direction of the tilting mechanism on the display screen 11 at the moving speed corresponding to the tilting operation amount.

Moreover, the display control unit 22 highlights a candidate (for example, "TOKYO AIRPORT"), on which the pointer 33 is overlapped, among the plurality of candidates which are displayed on a predetermined position on the display screen 11. In addition, the candidate is set to be selectable (that is, can be determined as the input results of the character input) by the pressing operation of the displacement mechanism of the operating member 12 operated by the operator.

In addition, in a case where all candidates of the name data corresponding to the character string, in which the input is determined in the character input, cannot be displayed on the display screen 11 to be viewed at one time, for example, in a case where the candidates are displayed on a plurality of pages, or in a case where the candidates are displayed while a scroll operation is required, when the pointer 33 is positioned on the candidates and the operator performs the rotation operation with a predetermined acceleration or more with respect to the rotation mechanism of the operating member 12, the display control unit 22 may perform page feeding, the scroll operation, or the like.

As described above, according to the input apparatus 10 of the present embodiment, the first hierarchy icon 31 is changed to the second hierarchy icon 32 when the pointer 33 approaches the first hierarchy icon 31. Thereby, even in the case where the plurality of first hierarchy icons 31 are displayed, the operator can easily and quickly recognize an operable first hierarchy icon 31, and an operation burden, which is required until the operator reaches a desired first hierarchy icon 31, can be relieved.

Moreover, in the second hierarchy icon 32, the plurality of options 32a are disposed in an annular shape, and the options 32a are shifted in an annular shape in the rotation direction (that is, clockwise rotation or counterclockwise rotation) of the rotation operation of the operating member 12. Thereby, the operator can intuitively recognize that the options 32a can be selected by the rotation operation of the operating member 12.

Moreover, the movement of the pointer 33 by the tilting operation of the operating member 12 and the shift of the option 32a by the rotation operation of the operating member 12 can be performed by a series of consecutive operations with respect to single operating member 12. Thereby, for example, a movement of a hand for adjusting grip on the operating member 12 or a visual line movement for searching the operating member 12 is not needed and intuitive operability and convenience can be improved.

Moreover, the shape of the pointer 33 is changed from the indication shape (for example, arrow shape or the like) to the annular shape according to the display of the second hierarchy icon 32, and thus, the operator can intuitively recognize that the options 32a can be selected by the rotation operation of the operating member 12. Therefore, intuitive operability and convenience can be improved.

Moreover, after the appropriate option 32a is determined by the pressing operation of the displacement mechanism of the operating member 12 operated by the operator during the display of the second hierarchy icon 32 which is in the state where the options 32 are displayed to be arranged in an annular shape, the determined option 32a is changed to the state which is displayed as the first hierarchy icon 31.

Thereby, the displays of other options 32 which have not been determined stop, and thus, the display area of the display screen 11 can be effectively used, and the determined option 32a can be quickly and accurately viewed by the operator. Therefore, the time of the visual line movement of the operator can be decreased.

In addition, in the above-described embodiment, in a case where there is a concern that the second hierarchy icon 32 is larger compared to the first hierarchy icon 31, and thus, the display positions between the second hierarchy icon and other displays (for example, a map image, or the like) are overlapped with each other and visibility is decreased, when the display is changed from the first hierarchy icon 31 to the second hierarchy icon 32, the display of the background portion with respect to the first hierarchy icon 31 and the second hierarchy icon 32 may be enlarged according to the size of the second hierarchy icon 32 by the display control unit 22.

Thereby, desired contrast with respect to the background of the second hierarchy icon 32 is secured, and thus, a decrease in the visibility of the second hierarchy icon 32 can be prevented.

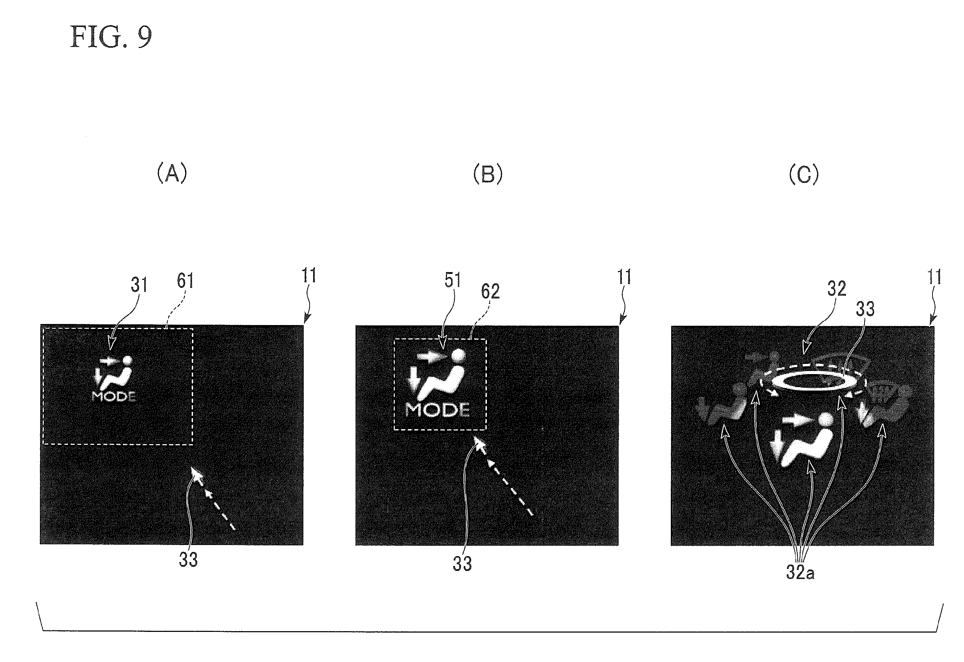

Moreover, in the above-described embodiment, the display control unit 22 is capable of displaying the first hierarchy icon 31, the second hierarchy icon 32, and the pointer 33 on the display screen 11. However, the present invention is not limited to this, and, for example, as shown in FIGS. 9(A) to 9(C), an intermediate hierarchy icon 51 different from the first hierarchy icon 31 may be displayed on the display screen 11.

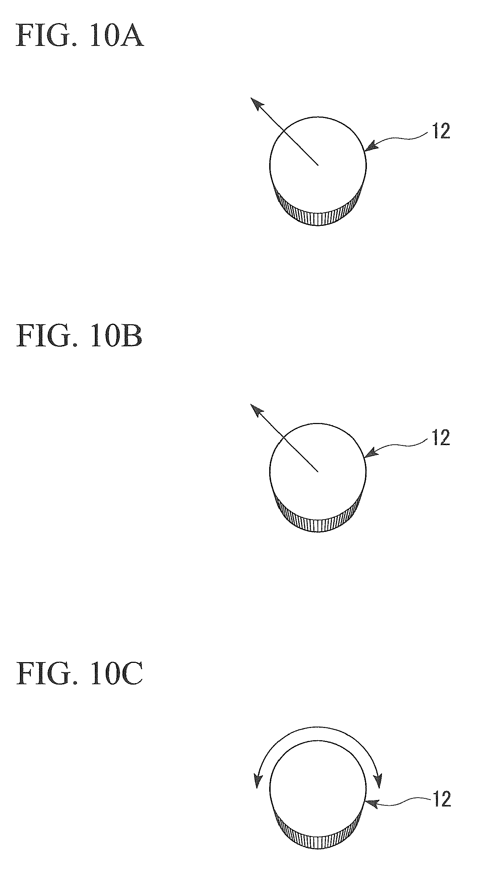

In this modification example, for example, as shown in FIG. 10A, if the tilting mechanism is operated to be tilted by the tilting operation of the tilting mechanism of the operating member 12 operated by the operator, for example, as shown in FIG. 9(A), the display control unit 22 moves the pointer 33 in the movement direction corresponding to the tilting operation direction of the tilting mechanism on the display screen 11 at the moving speed corresponding to the tilting operation amount.

In addition, when the pointer 33 stops within a first predetermined distance range 61 (for example, within a first predetermined distance range from the center portion of the first hierarchy icon 31, or the like) from the first hierarchy icon 31 which is displayed at a predetermined position on the display screen 11, or the pointer 33 moves at a first predetermined speed (includes the case where the speed is zero) or less within the first predetermined distance range 61 from the first hierarchy icon 31, for example, as shown in FIG. 9(B), the display control unit 22 changes the first hierarchy icon 31 to the intermediate hierarchy icon 51.

Moreover, the intermediate hierarchy icon 51 is an image which highlights the first hierarchy icon 31, and for example, is an image to which the first hierarchy icon 31, or the like is enlarged.

In addition, for example, as shown in FIG. 10B, if the tilting mechanism is operated to be tilted by the tilting operation of the tilting mechanism of the operating member 12 operated by the operator, for example, as shown in FIG. 9(B), the display control unit 22 moves the pointer 33 in the movement direction corresponding to the tilting operation direction of the tilting mechanism on the display screen 11 at the moving speed corresponding to the tilting operation amount.

Moreover, when the pointer 33 moves within a second predetermined distance range 62 (for example, within a second predetermined distance range from the center portion of the intermediate hierarchy icon 51, or the like) from the intermediate hierarchy icon 51 which is displayed at a predetermined position on the display screen 11 at a second predetermined speed (includes the case where the speed is zero), which is slower than the first predetermined speed, or less, for example, as shown in FIG. 9(C), the display control unit 22 changes the intermediate hierarchy icon 51 to the second hierarchy icon 32.

In addition, the display control unit 22 changes the shape of the pointer 33 from the indication shape (for example, an arrow shape or the like) to the annular shape according to the display of the second hierarchy icon 32, and prompts the operator to perform the rotation operation of the rotation mechanism of the operating member 12.

Moreover, for example, as shown in FIG. 10C, the display control unit 22 shifts the plurality of options 32a to an annular shape according to the rotation operation of the rotation mechanism of the operating member 12 operated by the operator, and highlights the option 32a at a predetermined position. In addition, the highlighted option 32a is set to be selectable (that is, can be determined as the setting corresponding to characteristics of the first hierarchy icon 31) by the pressing operation of the displacement mechanism of the operating member 12 by the operator.

According to this modification example, when the pointer 33 approaches the first hierarchy icon 31, the first hierarchy icon 31 is changed to the second hierarchy icon 32 via the intermediate hierarchy icon 51. Thereby, the operator can recognize the operable first hierarchy icon 31 more easily, quickly, and accurately, and thus, an operation burden, which is required until the operator reaches a desired first hierarchy icon 31, can be relieved.

Moreover, in the embodiment and the modification example described above, the display control unit 22 changes the first hierarchy icon 31 to the second hierarchy icon 32 according to the speed of the pointer 33 which moves on the display screen 11. However, the present invention is not limited to this, and the display control unit 22 may change the first hierarchy icon 31 to the second hierarchy icon 32 according to acceleration of the pointer 33.

In addition, in the embodiment and the modification example described above, the rotation mechanism of the operating member 12 or the operation-detecting unit 21 may detect the rotation operation of the rotation mechanism of the operating member 12 operated by the operator only when the second hierarchy icon 32 is displayed on the display screen 11.

Thereby, false detection is prevented, and an operation load of the input apparatus 10 can be relieved.

Moreover, in the embodiment and the modification example described above, the operating member 12 and the operation-detecting unit 21 may detect other operations with respect to the operating member 12 operated by the operator, for example, striking, rubbing, holding, tracing, twisting, sweeping, or the like.

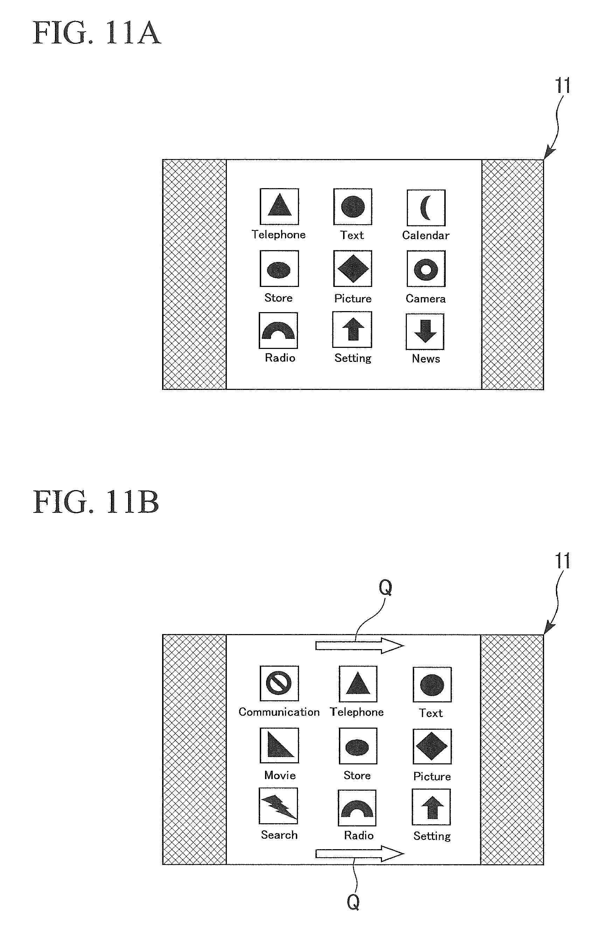

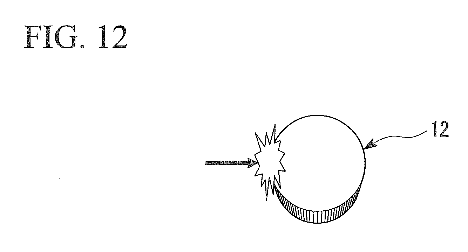

For example, as shown in FIGS. 11A and 11B, in a state where various menu items are displayed on the display screen 11, or the like, for example, as shown in FIG. 12, when the operation, in which the operator strikes the operating member 12, is performed, the display control unit 22 performs the shift from the display state shown in FIG. 11A to a page feeding direction Q corresponding to the operation direction with respect to the operation member 12, for example, to display contents shown in FIG. 11B, or performs display switching to the new display contents.

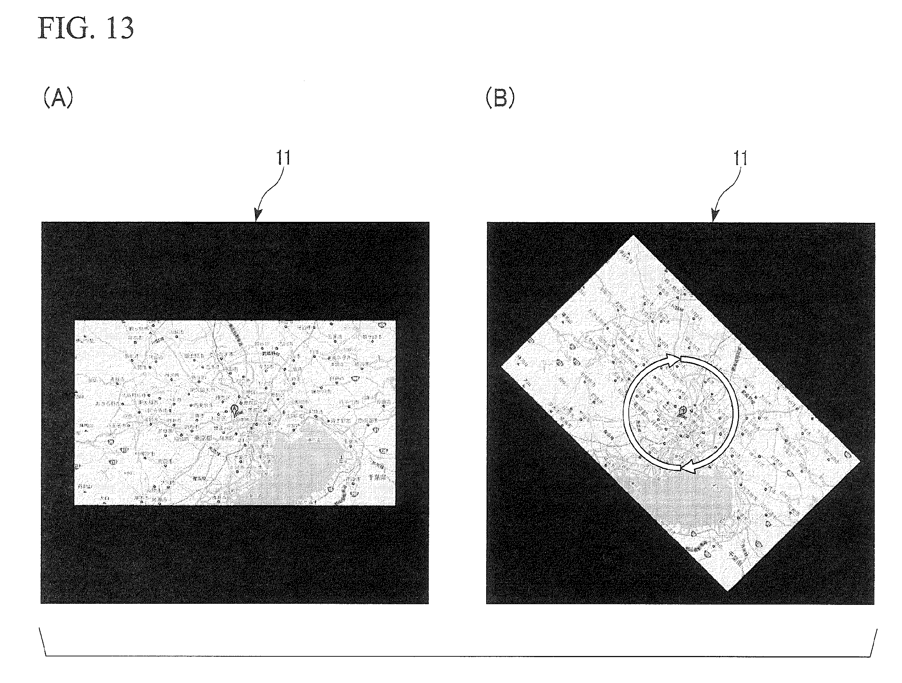

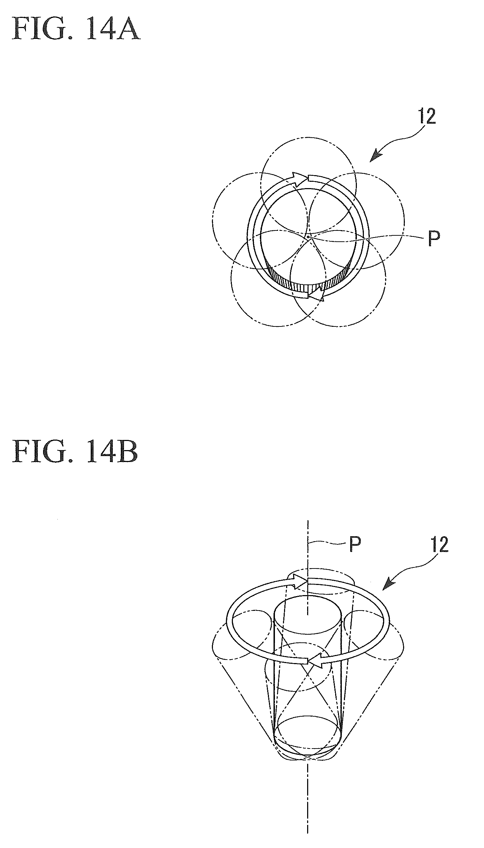

Moreover, for example, in a state where a map image shown in FIGS. 13(A) and 13(B) or a plurality of menu items are displayed on the display screen 11, or the like, for example, as shown in FIGS. 14A and 14B, when the rotation operation of the operating member 12 operated by the operator, that is, an operation, in which the operating member 12 is rotated around an axis P in a state where the operating member 12 is inclined from the axis P, is performed, the display control unit 22 performs rotational shift of the display contents in the rotation direction corresponding to the rotation operation direction (that is, clockwise rotation or counterclockwise rotation) with respect to the operating member 12, or performs sorting of arrangement of the plurality of menu items.

Moreover, in the input apparatus 10 according to the embodiment and the modification example described above, for example, the display screen 11 may be a dashboard display disposed on the upper portion of the dashboard, a head up display provided on a front window (not shown), a multi information display disposed on an instrument panel (not shown), a display disposed near various instruments (not shown) of an instrument panel (not shown), or the like.

Moreover, the input apparatus 10 may be mounted on apparatus other than the vehicle.

### Industrial Applicability

According to the present invention, when the pointer approaches the first hierarchy icon, since the first hierarchy icon is changed to the second hierarchy icon, the operator can easily and quickly recognize the operable first hierarchy icon, and the operation burden, which is required until the operator reaches a desired first hierarchy icon, can be relieved.

### Reference Signs List

10: input apparatus
11: display screen (display device)
12: operating member (input device)
13: control device
21: operation-detecting unit
22: display control unit (display device)
31: first hierarchy icon
32: second hierarchy icon
32a: option
33: pointer
41: predetermined distance range
51: intermediate hierarchy icon
61: first predetermined distance range
62: second predetermined distance range

## Claims

1. An input apparatus comprising:
a display device that displays a first hierarchy icon, a second hierarchy icon which is in a state where setting options corresponding to characteristics of the first hierarchy icon are displayed to be arranged in an annular shape, and a pointer; and
an input device that integrally comprises a rotation device, a joystick device, and a determination device,
wherein the display device moves the pointer in a direction corresponding to an operation direction in which the joystick device is operated by an operation of the joystick device of the input device operated by an operator,
wherein when the pointer stops within a predetermined distance range from a center portion of the first hierarchy icon or the pointer moves at a predetermined speed or less within the predetermined distance range from the center portion of the first hierarchy icon, the display device changes the first hierarchy icon to the second hierarchy icon,
wherein the display device shifts the options in the annular shape in a rotation direction in which the rotation device is operated to be rotated by a rotation operation of the rotation device of the input device operated by the operator, and
wherein the determination device of the input device determines setting of the option, which is positioned at a predetermined position by a predetermined operation of the operator among the options, as the setting corresponding to the characteristics of the current first hierarchy icon.

2. An input apparatus comprising:
a display device that displays a first hierarchy icon, a second hierarchy icon which is in a state where setting options corresponding to characteristics of the first hierarchy icon are displayed to be arranged in an annular shape, an intermediate hierarchy icon different from the first hierarchy icon, and a pointer; and
an input device that integrally comprises a rotation device, a joystick device, and a determination device,
wherein the display device moves the pointer in a direction corresponding to an operation direction in which the joystick device is operated by an operation of the joystick device of the input device operated by an operator,
wherein when the pointer stops within a first predetermined distance range from a center portion of the first hierarchy icon or the pointer moves at a first predetermined speed or less within the first predetermined distance range from the center portion of the first hierarchy icon, the display device changes the first hierarchy icon to the intermediate hierarchy icon,
wherein when the pointer moves at a second predetermined speed, which is slower than the first predetermined speed, or less within a second predetermined distance range from a center portion of the intermediate hierarchy icon, the display device changes the intermediate hierarchy icon to the second hierarchy icon,
wherein the display device shifts the options in the annular shape in a rotation direction in which the rotation device is operated to be rotated by the rotation operation of the rotation device of the input device operated by the operator, and
wherein the determination device of the input device determines setting of the option, which is positioned at a predetermined position by a predetermined operation of the operator among the options, as the setting corresponding to the characteristics of the current first hierarchy icon.

3. The input apparatus according to Claim 1 or 2,
wherein after the option is determined by the determination device, the display device displays the determined option as the first hierarchy icon.

4. The input apparatus according to Claim 1 or 2,
wherein the display device causes the pointer to be an annular shape when the second hierarchy icon is displayed.

5. The input apparatus according to Claim 1 or 2,
wherein the rotation device detects the rotation of the rotation device only when the display device displays the second hierarchy icon.
